# EUROPEAN PATENT APPLICATION

(11) **EP 2 192 133 A1**
(43) Date of publication of application: **02.06.2010**
(21) Application number: 08168572.9
(22) Date of filing: 07.11.2008
(51) Int. Cl.: C08F 10/00, C08F 2/00, C08F 2/06, C08F 2/14

(54) **A polyolefin preparation process with reduced tendency to reactor fouling**

(71) Applicant: Borealis AG, 1220 Vienna (AT)
(72) Inventor: Hakala, Kimmo, 00100 Helsinki (FI); Noopila, Tuomas, 00250 Helsinki (FI); Tuominen, Olli, 00930 Helsinki (FI); Leskinen, Pauli, 00700 Helsinki (FI)
(74) Representative: Maiwald Patentanwalts GmbH

(57) **Abstract**

The present invention relates to a process for the preparation of a polyolefin, wherein ethylene and/or propylene are polymerised in a liquid or supercritical hydrocarbon reaction medium of a polymerisation reactor R1 in the presence of a solid catalyst composition and an antifouling composition, the solid catalyst composition comprising
(i) a transition metal compound of formula (I)

LₘRₙMX_{q} (I)

wherein
M is a transition metal of anyone of the groups 3 to 10 of the periodic table (IUPAC),
each X is independently a monovalent anionic σ-ligand,
each L is independently an organic ligand which coordinates to the transition metal M,
R is a bridging group linking two organic ligands (L),
m is 1, 2 or 3,
n is 0, 1 or 2,
q is 1, 2 or 3,
m+q is equal to the valency of the transition metal M, and
(ii) a cocatalyst comprising a metal M' of Group 13 of the periodic table (IUPAC),
the solid catalyst composition having a porosity measured according to ASTM 4641 of less than 1.40 ml/g,
and
the antifouling composition comprising an organic compound which has at least 14 carbon atoms and comprises at least one polar functional group.

## Description

The present invention relates to a process for the preparation of polyolefins which has a low tendency to reactor fouling.

It is well known that the huge variety of different polymer types is achieved by specific tailored processes. Such different processes have typically different variables and parameters, including different monomer(s), solvents, additives, reaction conditions, catalyst systems, and the like. The properties and characteristics of the final products are quite often dependent on the components used in the process and on the parameters of the process that are selected, and it has been recognized that small modifications in such variables and parameters can create significant differences in the final product, e.g. polymer properties, but also in the effectiveness including catalyst productivity and operability of the overall process, presence or absence of foulings and agglomerates and reproducibility of the products.

As a general rule, the catalyst productivity should be as high as possible. Further to achieve high out-put rates, the bulk density and also flowability of the produced polymer should be high enough.

Nowadays, a slurry reactor is a type of reactor which is frequently used in polymerisation processes either alone or in combination with additional reactors, like other slurry reactors or gas phase reactors. The reaction medium in a slurry reactor is either a saturated light hydrocarbon (especially for the manufacture of polyethylene) or liquid monomer, like propylene (for the manufacture of polypropylene). Furthermore, heterogeneous catalyst systems are commonly used in such processes to avoid the drawbacks of the homogeneous processes, like reactor fouling caused by the obtained polymers with low bulk density (fluffy material).

The fouling manifests itself as unstable and inhomogeneous production, with formation of agglomerates and on the other hand fluffy material and build up of polymer deposits (foulings) on the inner surfaces of the reactor(s). As a result the final polymer will contaminate and its quality will be reduced. Also, the unstable production due to fouling makes it difficult to produce a polymer with a consistent and reproducible quality. Further, in operability point of view these decrease the running efficiency, e.g. decreased heat transfer, problems in pumping systems etc, as well in worse cases severe blockings and break down of the process.

Lot of work has been done in order to solve the problems caused by fouling of the reactors. Several types of antifouling or antistatic agents have been used in polymerisation processes in order to solve the fouling problem in several steps of polymerisation processes. It is also known to treat supported catalysts, like silica supported catalysts with some surface modifiers, like metal stearates etc. What kind of antifouling system is selected depends to a big deal of the process type and catalyst used as well desired polymer products. Although lot of work has been done, there is still room for improved processes. Especially, if new type of catalysts are used, the reason for fouling problem might be different and thus different solutions to solve the problem are needed.

EP 1 803 747 A1 discloses the treatment of a supported catalyst with a surface modifier for lowering the gel content in the resulting polyolefin.

As disclosed above, high activity catalysts are usually desired to be used in olefin polymerisation processes. However, high activity might cause problems in the process. In case catalyst with high loading of active metal is used, it might happen that some parts of the catalyst leach out from the catalyst and form hot catalyst particles and further undesired fluffy hot polymer formation. This hot polymer material tends to stick on the walls of the reactor causing reactor fouling and further agglomeration formation might appear, which naturally deteriorates the final polymer quality as such or due to the breaking of agglomerates into very small particles.

Heterogeneous catalyst systems, single site or Ziegler-Natta type, are normally used in olefin polymerisation processes. Conventional heterogeneous catalysts are solid catalyst systems, where catalyst components are supported or loaded onto catalytically inert carrier material, such as organic and inorganic support materials, like silica, MgCl₂ or porous polymeric material. Silica is the mostly used as carrier material with single site, e.g. metallocene type catalysts. However, there are problems which result from the use of supported catalyst systems. For instance, it is difficult to get an even distribution of the catalyst components in the porous carrier material; and leaching of the catalyst components from the support can occur. Such drawbacks lead to unsatisfactory polymerisation behaviour of the catalyst, and, as a result, the morphology of the polymer product thus obtained is also poor. Furthermore, such classic heterogeneous catalyst systems show reduced catalyst activity which is of course detrimental as the catalyst amount must be increased which in turn leads to polymer products contaminated with rather high amounts of catalyst residues.

To avoid the contamination of the polymer products with catalytic residues, new catalyst systems have been developed which can be described as being "self-supported", i.e. not being adsorbed on a catalytically inert support material. This type of catalysts have high loading of active metals in the catalyst particles. Such new catalyst systems enable in principle to increase the output rate of polymer processes since the bulk density of the polymerized product can be increased. For the first time such new metallocene catalyst systems have been described in WO 03/051934.

However, when using this new type of self-supported metallocene catalyst system, it has been realised that the catalyst has some tendency to dissolve to some extent in a fluid hydrocarbon reaction medium as used e.g. in slurry reactors and thus the morphology of the self-supported catalyst particles is affected adversely. Furthermore, it must be considered that the self-supported catalyst system generates - due to the high amount of catalytically active species in the catalyst system - at the beginning of the polymerization high temperatures which might result in melting of the produced material. Both effects, i.e. the partial dissolving of the catalyst system and the heat generation, tend to promote fouling and sheeting in the reactors.

Thus, there is still a need to develop methods and processes for olefin polymerisation, where the beneficial properties of self-supported catalyst systems can be effectively applied in polymerization processes for ethylene and propylene polymerisations, in particular in processes in which preferably at least one slurry reactor is used.

Thus, the object of the present invention is to provide an improved polymerisation process, where the new type of catalyst system is used, and which enables high polymerisation productivity in terms of high polymer out-put, and which avoids fouling and/or sheeting in the reactor system.

The object is solved by providing a process for the preparation of a polyolefin, wherein ethylene and/or propylene are polymerised in a liquid or supercritical hydrocarbon reaction medium of a polymerisation reactor R1 in the presence of a solid catalyst composition and an antifouling composition the solid catalyst composition comprising
(i) a transition metal compound of formula (I)

   LₘRₙMX_{q} (I)

   wherein
   M is a transition metal of anyone of the groups 3 to 10 of the periodic table (IUPAC),
   each X is independently a monovalent anionic σ-ligand,
   each L is independently an organic ligand which coordinates to the transition metal M,
   R is a bridging group linking two organic ligands L,
   m is 1, 2 or 3,
   n is 0, 1 or 2,
   q is 1, 2 or 3,
   m+q is equal to the valency of the transition metal M,
   and
(ii) a cocatalyst comprising a metal M' of Group 13 of the periodic table (IUPAC),
the solid catalyst composition having a porosity measured according to ASTM 4641 of less than 1.40 ml/g, and
the antifouling composition comprising an organic compound which has at least 14 carbon atoms and comprises at least one polar functional group.

Preferably, the polyolefin is an ethylene homo- or copolymer or a propylene homo- or copolymer.

The liquid or supercritical hydrocarbon reaction medium of the present invention can be selected from those which are commonly used in known types of polymerisation reactors such as slurry reactors, in particular loop slurry reactors. Preferably, the hydrocarbon reaction medium comprises a C₃ to C₆ hydrocarbon.

As indicated above, ethylene and/or propylene are polymerised in a liquid or supercritical hydrocarbon reaction medium. The term "supercritical" as used herein is to be interpreted according to its usual meaning, i.e. the term "supercritical" means according to this invention that the vapour and liquid phases in the reaction vessel are indistinguishable. Thus, at supercritical conditions the liquid state of the matter ceases to exist. As a liquid is heated, its density decreases while the pressure and density of the vapour being formed increases. The liquid and vapour densities become closer and closer to each other until the critical temperature is reached where the two densities are equal and the liquid-gas line or phase boundary disappears.

Preferably, the C₃ to C₆ hydrocarbon is selected from propane, i-butane, pentane, hexane, or any mixture thereof, in particular if the polyolefin to be prepared is a polyethylene.

Alternatively, it may be preferred that the C₃ to C₆ hydrocarbon is liquid propylene, in particular if the polyolefin to be prepared is a polypropylene.

Preferably, the polymerisation reactor R1 is a slurry reactor, more preferably a loop reactor.

If the process of the present invention is directed to the formation of polyethylene, the following process conditions might be preferred.

In principal any polymerisation method including solution and slurry polymerisation can be used for producing the polymer composition of the invention.

At least one step is produced in a slurry polymerisation process. Such slurry process may be carried e.g. in a slurry reactor, preferably in a loop reactor.

In case a multistage polymerization is used, in addition to the slurry reactor the process configuration can comprise one or more additional polymerization steps, usually carried out in slurry and/or gas phase reactors.

A preferred multistage process is a "loop-gas phase"-process, such as developed by Borealis (known as BORSTAR® technology) described e.g. in patent literature, such as in EP 0 887 379 or EP 0 517 868.

If the polymer composition is multimodal at least with respect to the molecular weight distribution (MWD), then the lower molecular weight (LMW) component and the higher molecular weight (HMW) component are made in different steps (a) and (b), in any order. The LMW fraction is preferably component (i) produced in step (a) and the HMW fraction is component (ii) which is produced in a subsequent step (b) in the presence of component (i) as obtained from the first reactor.

Optionally, the process can further comprise a prepolymerisation step in a manner known in the field, which prepolymerisation step may precede the first actual polymerization step.

The process of the invention is preferably a continuous process.

The conditions for the slurry reactor, preferably loop reactor, of step (a) may be as follows:
- a diluent is used, which diluent can be an aliphatic hydrocarbon in a manner known in the art,
- the temperature is within the range of 40°C to 110°C, preferably between 60°C and 100°C or 70 - 110°C,
- the pressure is within the range of 20 bar to 80 bar, preferably between 30 bar to 70 bar,
- hydrogen can be added for controlling the molar mass in a manner known per se, (e.g. preferably 100 to 900 mols of H2/kmols of ethylene)
- the residence time is typically 0.5 to 5 hours.

In gas phase the conditions are preferably as follows:
- the temperature is within the range of 50°C to 130°C, preferably between 60°C and 115 °C,
- the pressure is within the range of 10 bar to 60 bar, preferably between 10 bar to 40 bar,
- hydrogen can be added for controlling the molar mass in a manner known per se, (e.g. preferably 0 to 50 mols of H2/kmols of ethylene)
- the residence time is typically 1 to 8 hours

In addition to hydrogen, scavengers can be used in the process as known in the art. As catalyst scavengers A1 compounds, like A1 alkyl compounds, e.g. triethyl aluminium, and tri-i-butyl aluminium are used.

If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a fluidised bed or in an agitated bed. Also fast fluidisation may be utilised.

If the process of the present invention is directed to the preparation of polypropylene, the following process conditions might be preferred.

In principal any polymerisation method including solution, slurry and gas phase polymerisation can be used for producing the polymer composition of the invention.

Slurry polymerisation is preferably a bulk polymerisation. "Bulk" means a polymerisation in a reaction medium comprising at least 60 wt-% monomer.

At least one component is produced in a slurry process, preferably bulk process). Such slurry, or bulk, process may be carried e.g. in a slurry reactor, preferably in a loop reactor. In addition to the slurry reactor the process configuration can comprise at least one additional polymerisation step carried out is slurry and/or gas phase reactor.

Multistage processes include also bulk/gas phase reactors known as multizone gas phase reactors for producing e.g. multimodal polymer compositions.

A preferred multistage process is a "loop-gas phase"-process, such as developed by Borealis (known as BORSTAR® technology) described e.g. in patent literature, such as in EP 0887 379 or EP 517 868.

Optionally, the process can further comprise a prepolymerisation step in a manner known in the field, which prepolymerisation step may precede the first actual polymerization step.

The process of the invention is preferably a continuous process.

Preferably, the process is the two stage process as defined above, wherein the slurry polymerization of step (a) is preferably carried out in the following conditions:
- the temperature is within the range of 40°C to 110°C, preferably between 60°C and 100°C, 70-90 °C,
- the pressure is within the range of 20 bar to 80 bar, preferably between 30 bar to 60 bar,
- hydrogen can be added for controlling the molar mass in a manner known per se;

The slurry, typically bulk, polymerisation is preferably carried out in a loop reactor. The reaction mixture from the slurry (bulk) reactor is transferred to the gas phase reactor, where conditions are preferably as follows:
- the temperature is within the range of 50°C to 130°C, preferably between 60°C and 100°C,
- the pressure is within the range of 5 bar to 50 bar, preferably between 15 bar to 35 bar,
- hydrogen can be added for controlling the molar mass in a manner known per se.

In addition to the hydrogen, scavengers can be used in a manner known in the art. Typical scavengers are alkyl aluminium compounds, like triethyl aluminium and tri i-butyl aluminium.

The residence time can vary in both reactor zones. In one embodiment of the "process for producing the polymer composition" the residence time in slurry reactor, e.g. loop is in the range 0.5 to 5 hours, e.g. 0.5 to 2 hours and the residence time in gas phase reactor will generally be 1 to 8 hours.

If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a fluidised bed or in an agitated bed. Also fast fluidisation may be utilised.

The following statements now apply to the preparation of polyethylene as well as to the preparation of polypropylene.

Preferably, the transition metal compound of formula (I) and the cocatalyst of the solid catalyst composition represent at least 70 wt%, more preferably at least 80 wt%, even more preferably at least 90 wt%, even further preferably at least 95 wt% of the solid catalyst composition.

It is preferred that the solid catalyst composition does not comprise an inorganic support material such as silica, alumina or MgCl₂ which is otherwise commonly used in heterogeneous catalyst systems, i.e. the catalyst is not supported on external support or carrier material.

Within the present invention it is preferred that that a prepolymerisation step is carried out. The prepolymerisation step can be carried out in the actual polymerisation reactor R1 under appropriate prepolymerisation conditions before the actual polymerisation starts, or it can be carried out in a separate prepolymerisation reactor PR1 preceding the actual polymerisation reactor. Preferably a separate prepolymerisation reactor is used. The prepolymerisation reactor can be any prepolymerisation reactor commonly used in the field of polymerisation technology, e.g. a slurry reactor, in particular a loop reactor.

The polymer produced in the prepolymerisation reactor does not need to be a polyolefin. However, in a preferred embodiment, it is a polyolefin, more preferably a polyethylene or polypropylene. Even more preferably, if a polyethylene (or polypropylene) is produced in the polymerisation reactor R1, a polyethylene (or polypropylene) is prepared in the prepolymerisation reactor as well.

The amount of polymer produced in the prepolymerisation step is only a few wt-% of the total amount of polymer produced in the whole process, i.e. it is at most 10 wt-%, preferably less than 7 wt-%, or even less than 5 wt-%.

As indicated above, an antifouling composition is present in the fluid hydrocarbon reaction medium of the polymerisation reactor R1, said antifouling composition comprising an organic compound which has at least 14 carbon atoms and comprises at least one polar functional group.

Preferably, the polar functional group is selected from hydroxyl including phenolic groups, carboxylic acid, ketone, aldehyde, ester, ether, thioether, amine, epoxy, thiol, or any combination thereof.

Preferably, the organic compound comprises a hydrocarbyl group having at least 5 carbon atoms. In a preferred embodiment, the hydrocarbyl group having at least 5 carbon atoms is selected from linear or branched C₁₀ to C₂₂ hydrocarbyl groups, which may optionally include one or more carbon-carbon double bonds.

In a preferred embodiment, the organic compound may comprise at least one substituted or unsubstituted cyclic moiety having at least 5 ring atoms. Preferably, said cyclic moiety is a tetrahydrofuranyl ring having at least one, preferably two hydroxyl groups attached to the ring.

Preferably, the organic compound is selected from sterically hindered phenols, ethoxylated amines, ethoxylated amides, sorbitan ester compounds, thioether compounds, or mixtures thereof.

Preferably, the sorbitan ester is a sorbitan C₈ to C₂₀ fatty acid ester. More preferably, the sorbitan fatty acid ester is selected from sorbitan stearate, sorbitan monooleate, or mixtures thereof.

Preferably, the antifouling composition is present in the fluid hydrocarbon reaction medium such as liquid propylene, in a concentration of from 0.5 to 50 wt-ppm, more preferably from 1 to 40 wt-ppm, even more preferably from 2 to 25 wt-ppm. These preferred values apply to the polymerisation reactor R1 as well as to the prepolymerisation reactor PR1.

Preferably, the weight ratio of the antifouling composition feed to the catalyst feed to the polymerisation reactor R1 and/or prepolymerisation reactor PR1 is preferable from 0.05 to 2, more preferably from 0.1 to 1, even more preferably from 0.1 to 0.6.

In a preferred embodiment the catalyst composition and the antifouling composition are fed to the reactor R1, preferably to the prepolymerisation reactor PR1, in a hydrocarbon solution, preferably in hydrocarbon solution used as reaction medium. It is possible that only some part of the reaction medium is fed together with the catalyst composition and the antifouling agent, and the rest of medium is fed separately into the reactor. Essential is, that the catalyst and antifouling agent can be effectively flushed into the reactor by using the hydrocarbon solution of C₃ to C₈, preferably the reaction medium used, like liquid propane, i-butane, pentane, hexane or propene, depending on the monomers to be polymerised.

There are several alternatives for addition orders of components to be fed to the reactor, preferably to the prepolymerisation reactor, if used in the process. It is possible that the reaction medium feed is connected to the catalyst feed, into which the antifouling agent has been added. Or, the antifouling agent can be added into the reaction medium feed, which is then connected to the catalyst composition feed.

However, it is also possible that the antifouling agent and the solid catalyst composition are fed separately to the polymerisation reactor R1 and/or to the prepolymerisation reactor PR1, preferably flushed with the reaction medium to the reactor.

According to the present invention there is no special catalyst pre-treatment of solid catalyst of the invention with the antifouling agent, although some short time contact in the liquid solution in the feed line is possible.

Within the present invention, it is possible that the prepolymerisation is carried out in the polymerisation reactor R1, when appropriate prepolymerisation conditions are used. However, especially in propylene polymerisation process, it is usually preferred to use a separate prepolymerisation reactor PR1.

As indicated above, a solid catalyst composition is used in the process of the present invention, which comprises a transition metal compound of formula (I).

The transition metal compound of formula (I) of the catalyst composition has preferably the following features:

Preferably, the organic ligand L is selected from
(a) a substituted or unsubstituted cycloalkyldiene, or
(b) an acyclic η¹-, an acyclic η²-, an acyclic η³-, an acyclic η⁴- or cyclic η⁶-ligand composed of atoms from Groups 13 to 16 of the periodic table (IUPAC), or
(c) a cyclic σ-, cyclic η¹-, a cyclic η²-, a cyclic η³-, a Cyclic η⁴- or a acyclic η⁶-, mono-, bi- or multidentate ligand composed of unsubstituted or substituted mono-, bi- or multicyclic ring systems selected from aromatic or nonaromatic or partially saturated ring systems and containing carbon ring atoms.

Preferably, the transition metal compound has the following formula (II)

(Cp)₂RₙMX₂ (II)

wherein
M is zirconium (Zr), hafnium (Hf), or titanium (Ti), preferably zirconium (Zr) or hafnium (Hf),
each X is independently a monovalent anionic σ-ligand,
each Cp is independently an unsaturated organic cyclic ligand which coordinates to the transition metal M,
R is a bridging group linking two organic ligands (L),
nis 0 or 1,and
at least one Cp-ligand, preferably both Cp-ligands, is/are selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

Preferably, the ligands X are independently selected from the group consisting of hydrogen, halogen, C1 to C20 alkyl, C1 to C20 alkoxy, C2 to C20 alkenyl, C2 to C20 alkynyl, C3 to C12 cycloalkyl, C6 to C20 aryl, C6 to C20 aryloxy, C7 to C20 arylalkyl, C7 to C20 arylalkenyl, -SR", -PR"₃, -SiR"₃, -OSiR"₃ and -NR"₂, and wherein each R" is independently hydrogen, C1 to C20 alkyl, C2 to C20 alkenyl, C2 to C20 alkynyl, C3 to C12 cycloalkyl or C6 to C20 aryl.

Preferably, at least one organic ligand (L), preferably both organic ligands (L), comprise(s) one or more residues independently selected from the group consisting of halogen, C1 to C10 alkyl, C2 to C20 alkenyl, C2 to C20 alkinyl, C3 to C12 cycloalkyl, C6 to C20 aryl, C7 to C20 arylalkyl, C3 to C12 cycloalkyl which contains 1, 2, 3 or 4 heteroatom(s) in the ring moiety, C6 to C20 heteroaryl and C1 to C20 haloalkyl.

Preferably, the bridging group (R) has a bridging length of 1 to 7 atoms, preferably with at least one heteroatom.

Preferably, the bridging group(s) (R) has (have) the formula (III)

-Y(R')₂- (III)

wherein
Y is carbon (C), silicon (Si) or germanium (Ge), and
R' is C₁ to C₂₀ alkyl, C₆ to C₁₂ aryl, C₇ to C₁₂ arylalkyl, or trimethylsilyl.

Further details about appropriate transition metal compounds to be used in the solid catalyst composition of the present invention can be found in WO 03/51934 which is herewith incorporated by reference.

As a further requirement, the solid catalyst composition comprises a cocatalyst or activator, which terms have the same meaning in the present application. Any cocatalyst comprising a metal (M') of Group 13 of the periodic table (IUPAC) is suitable. However it is preferred that the solid catalyst composition includes a cocatalyst which comprises aluminium (Al). In addition the cocatalyst may comprise boron (B). Examples of such cocatalyst are organo aluminium compounds, such as trialkylaluminium compounds and/or aluminoxane compounds

In particular preferred cocatalysts are aluminoxanes, in particular C1 to C10-alkylaluminoxanes, most particularly methylaluminoxane (MAO). It is also possible to use other cation complex forming catalyst activators (cocatalysts) besides or in addition to aluminoxanes. Said activators are commercially available or can be prepared according to the prior art literature.

As indicated above, the solid catalyst composition has a porosity measured according to ASTM 4641 of less than 1.40 ml/g.

Preferably, the solid catalyst composition has a porosity of less than 1.0 ml/g, more preferably of less than 0.5 ml/g, still more preferably of less than 0.3 ml/g. In another preferred embodiment, the porosity is not detectable when determined with the method applied according to ASTM 4641.

Preferably, the solid catalyst composition has a specific surface area measured according ASTM D 3663 of less than 25 m²/g, more preferably of less than 20 m²/g, even more preferably of less than 15 m²/g and yet more preferably of less than 10 m²/g. In a preferred embodiment, the solid catalyst composition in accordance with the present invention may even have a specific surface area of 5m²/g or less. This means that the original catalyst composition particles are very non-porous and a smooth surface.

Preferably, the solid catalyst composition has a mean particle size of not more than 500 µm, more preferably in the range of 2 to 500 µm, even more preferably 5 to 200 µm. It is in particular preferred that the mean particle size is below 80 µm, still more preferably below 70 µm. A preferred range for the mean particle size is 5 to 80 µm, more preferred 10 to 60 µm. In some cases the mean particle size is in the range of 20 to 50 µm.

The solid catalyst composition as used in the process of the present invention can be prepared according to the general methods described in WO 03/051934. This document is herewith included in its entirety by reference. Hence the solid catalyst composition is preferably in the form of solid catalyst particles, obtainable by a process comprising the steps of
(a) preparing a solution of one or more components of the catalyst composition;
(b) dispersing said solution in a solvent immiscible therewith to form an emulsion in which said one or more components are present in the droplets of the dispersed phase,
(c) solidifying said dispersed phase to convert said droplets to solid particles and optionally recovering said particles to obtain said solid catalyst composition.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably C₃-C₃₀ perfluoroalkanes, -alkenes or -cycloalkanes, more preferred C₄-C₁₀ perfluoro-alkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed *in situ* from catalyst components in said solution of the dispersed phase.

In principle, the emulsifying agent may be any suitable agent which contributes to the formation and/or stabilization of the emulsion and which does not have any adverse effect on the catalytic activity of the catalyst composition. The emulsifying agent may be a surfactant based on hydrocarbons, optionally interrupted at least once with one or more heteroatoms, preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated C₁ to C₃₀ alcohol, which reacts e.g. with a cocatalyst component, such as aluminoxane.

In principle any solidification method can be used for forming the solid particles from the dispersed droplets. According to a preferred embodiment, the solidification is effected by a temperature change treatment. Hence the emulsion is subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

For further details, embodiments and examples of the continuous and dispersed phase system, emulsion formation method, emulsifying agent and solidification methods reference is made to the above cited international patent application WO 03/051934.

The invention will now be described in further detail by making reference to the following examples.

### Examples

### Measuring methods

**Porosity:** BET with N₂ gas, ASTM 4641, apparatus Micromeritics Tristar 3000; sample preparation: at a temperature of 50 °C, 6 hours in vacuum.

**Surface area:** BET with N₂ gas ASTM D 3663, apparatus Micromeritics Tristar 3000; sample preparation: at a temperature of 50 °C, 6 hours in vacuum.

**Bulk density BD** is measured according ASTM D 1895.

**MFR₂ (230 °C)** is measured according to ISO 1133 (230 °C, 2.16 kg load).

### Example 1

### Propylene polymerisation with antifouling composition added to the prepolymerisation reactor

The polymerisation tests were carried out in a continuously operating pilot plant. The catalyst (as described in the example 3 below) was provided as a suspension in white oil with the catalyst concentration of 4 wt-%. The catalyst suspension was further diluted with Primol 352 white oil to the concentration of 1 wt-%. This catalyst suspension (340 g/h) was continuously pumped to the stirred prepolymerisation reactor together with 50 kg/h liquid propylene, 0.24 g/h hydrogen, and 400 g/h triethylaluminum (1 wt-%) solution in n-pentane. As antifouling composition was used Atmer 105V (100% sorbitan mono-oleate, available by Ciba Speciality Chemicals) (0.3 wt-% solution in n-pentane) was fed continuously to the prepolymerisation reactor at the rate of 130 g/h. Hence, the Atmer 105V feed was 7.8 ppm relative to the propylene feed. The prepolymerisation reactor pressure was 55 bar, temperature 35 degrees C, and the residence time about 30 min. From the prepolymerisation reactor the slurry was continuously transferred to the loop-type polymerisation reactor into which additional 85 kg/h liquid propylene and 3.7 g/h hydrogen were fed. Hence, based on the total propylene feeds (prepolymerisation reactor and loop reactor) the Atmer 105V concentration in the loop reactor was 2.9 ppm. In the loop reactor the pressure was 54.5 bar, temperature 75 degrees C, and the residence time about 40 min. The polypropylene product from the loop reactor had the melt flow rate of 1000 g/10 min (MFR₂ (230 °C). The polymer powder samples taken from the loop reactor had bulk densities of above 350 g/L and they contained no fluffy material. The polymerisation was continued for 48 hours without any indication of reactor fouling/sheeting or chunks formation.

### Example 2. (comparative):

### Propylene polymerisation without antifouling composition

The polymerisation conditions of Example 1 were used except that no Atmer 105V solution was fed. The polymerisation was continued for six hours. The polypropylene product from the loop reactor had the melt flow rate of 1000 g/10 min (MFR₂ (230 °C). The polymer powder samples taken from the loop reactor had bulk densities of 300 - 350 g/L and they contained some fluffy material. Some sheeting was observed on the loop reactor walls.

### Example 3:

### Catalyst preparation

### Preparation of catalyst system

In a jacketed 90 dm³ glasslined stainless steel reactor the complex (*rac-*cyclohexyl(methyl)silanediylbis[2-methyl-4-(4'-*tert*-butylphenyl)indenyl]zirconium dichloride) solution was prepared at -5°C adding 0,85 kg of a 24,5 wt% PFPO((2,2,3,3,4,4,5,5,6,6,7,7,8,8,9,9,9-heptadecafluorononyl)oxirane)/toluene solution very slowly (3.4 ml/min) to 13,5 kg 30wt% MAO(methylaluminoxane)/toluene solution. The temperature was increased to 25°C and the solution was stirred for 60 minutes. After addition of 210 g of the complex the solution was stirred for an additional two hours. That mixture was pumped at 5 l/h to the rotor stator with the rotor stator pair 4M. In the rotor stator with a tip speed of 4 m/s the mixture was mixed with a flow of 32 l/h of PFC (hexadecafluoro-1,3-dimethylcyclohexane) thus forming an emulsion. The droplets in the emulsion were solidified by an excess flow of 450 l/h PFC at a temperature of 76°C in a Teflon hose. The hose was connected to a jacketed 160 dm³ stainless steel reactor equipped with a helical mixing element. In this reactor the catalyst particles were separated from the PFC by density difference. After the complex solution had been utilised the catalyst particles were dried in the 160 dm³ reactor at a temperature of 70°C and a nitrogen flow of 5 kg/h for 7 h.
Porosity and surface area below the detection limit.

| | |
|---|---|
| mol ratio Co/M (Al/Zr): | 260 mol/mol |
| Zr content: | 0,53 wt-% |
| A1 content: | 34,5 wt-% |

### Preparation of catalyst composition:

Catalyst oil slurry was prepared by measuring precisely about 35 kg of Primol 352 white oil into a jacketed 75 dm³ stainless steel reactor. The oil was vacumized by heating it to 100°C and applying vacuum 3 times. The oil was cooled down to -5 °C. 10 kg of the oil was transferred to a vessel (A) containing 1,6 kg of catalyst system prepared above. Vessel A was put into a drum roller for 1h. 10 kg oil from the reactor was taken into another vessel (B). The content of vessel A was transferred to the reactor. The oil from vessel B was transferred to vessel A for flushing purpose and further back into the reactor. The temperature was adjusted to 25 °C and the slurry was stirred for 30 min. The slurry was filtered through a 500 micron sieve into two product vessels. The reactor was washed with hot toluene at 80°C. The filtered slurry was transferred to the clean reactor and pressure was adjusted to 0,2 bar nitrogen. Temperature was set to 25°C and stirring speed was adjusted to 177 rpm. Hydrogen was added so that hydrogen partial pressure was 1,2 bar. Polymerisation was initiated by addition of propylene (≈3,6 bar partial pressure). During the polymerisation the total pressure was kept at 5.0 bar. The reaction was continued for 540min after which the reactor was degassed and flushed repeatedly with nitrogen. The weight of propylene added to the reactor was 6 kg. This gives a polymerisation degree of 4 g polymer/g catalyst system. The concentration of the catalyst system in this slurry is 4 wt%.

## Claims

1. A process for the preparation of a polyolefin, wherein ethylene and/or propylene are polymerised in a liquid or supercritical hydrocarbon reaction medium of a polymerisation reactor R1 in the presence of a solid catalyst composition and an antifouling composition,
the solid catalyst composition comprising
(i) a transition metal compound of formula (I)
LₘRₙMX_{q} (I)
wherein
M is a transition metal of anyone of the groups 3 to 10 of the periodic table (IUPAC),
each X is independently a monovalent anionic σ-ligand,
each L is independently an organic ligand which coordinates to the transition metal M,
R is a bridging group linking two organic ligands (L),
m is 1, 2 or 3,
n is 0, 1 or 2,
q is 1, 2 or 3,
m+q is equal to the valency of the transition metal M, and
(ii) a cocatalyst comprising a metal M' of Group 13 of the periodic table (IUPAC),
the solid catalyst composition having a porosity measured according to ASTM 4641 of less than 1.40 ml/g ,
and
the antifouling composition comprising an organic compound which has at least 14 carbon atoms and comprises at least one polar functional group.

2. The process according to claim 1, wherein the polyolefin is a polyethylene or a polypropylene.

3. The process according to claim 1 or claim 2, wherein the hydrocarbon reaction medium comprises a C₃ to C₆ hydrocarbon.

4. The process according to claim 3, wherein the C₃ to C₆ hydrocarbon is selected from propane, i-butane, pentane, hexane, or any mixture thereof.

5. The process according to claim 3, wherein the C₃ to C₆ hydrocarbon is propylene, more preferably liquid propylene.

6. The process according to one of the preceding claims, wherein the polymerisation reactor R1 is a slurry reactor, more preferably a loop reactor.

7. The process according to one of the preceding claims, wherein the solid catalyst composition has a specific surface area measured according ASTM D 3663 of less than 25 m²/g.

8. The process according to one of the preceding claims, wherein the transition metal compound of formula (I) and the cocatalyst represent at least 70 wt%, more preferably at least 80 wt%, even more preferably at least 90 wt%, even further preferably at least 95 wt% of the solid catalyst composition.

9. The process according to one of the preceding claims, wherein a prepolymerisation step is carried out.

10. The process according to claim 9, wherein the prepolymerisation is carried out in a separate prepolymerisation reactor PR1 preceding the polymerisation reactor R1.

11. The process according to claim 9 or 10, wherein the amount of the polymer(s) produced in the prepolymerisation step does not exceed 10 wt%, based on the total amount of the polyolefin prepared in the process.

12. The process according to one of the preceding claims, wherein the antifouling composition and the solid catalyst composition are fed together to the polymerisation reactor R1 and/or the prepolymerisation reactor PR1 in a fluid hydrocarbon, preferably in the fluid hydrocarbon reaction medium.

13. The process according to claim 12, wherein the antifouling composition is added to a catalyst feed comprising the solid catalyst composition, the catalyst feed is subsequently connected to a reaction medium feed comprising ethylene and/or propylene, and the combined feed is then introduced into the polymerisation reactor R1 and/or the prepolymerisation reactor PR1.

14. The process according to claim 12, wherein the antifouling composition is added to a reaction medium feed comprising ethylene and/or propylene, the reaction medium feed is subsequently connected to a catalyst feed comprising the solid catalyst composition, and the combined feed is then introduced into the polymerisation reactor R1 and/or the prepolymerisation reactor PR1.

15. The process according to one of the claims 1 to 11, wherein the antifouling composition and the solid catalyst composition are fed separately to the polymerisation reactor R1 and/or the prepolymerisation reactor PR1.

16. The process according to one of the preceding claims, wherein the transition metal compound has the following formula (II)
(Cp)₂RₙMX₂ (II)
wherein
M is zirconium (Zr), hafnium (Hf), or titanium (Ti), preferably zirconium (Zr) or hafnium (Hf),
each X is independently a monovalent anionic σ-ligand,
each Cp is independently an unsaturated organic cyclic ligand which coordinates to the transition metal (M),
R is a bridging group linking two organic ligands (L),
n is 0 or 1, and
at least one Cp ligand, preferably both Cp ligands, is/are selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

17. The process according to one of the preceding claims, wherein the polar functional group of the organic compound in the antifouling composition is selected from hydroxyl, carboxylic acid, ketone, aldehyde, ester, ether, thioether, amine, epoxy, and/or thiol.

18. The process according to one of the preceding claims, wherein the organic compound comprises a hydrocarbyl group having at least 5 carbon atoms which hydrocarbyl group is selected from linear or branched C10 to C22 hydrocarbyl groups and optionally includes one or more carbon-carbon double bonds, and/or wherein the organic compound comprises at least one substituted or unsubstituted cyclic moiety having at least 5 ring atoms which is selected from a tetrahydrofuranyl ring having at least one, preferably two hydroxyl groups attached to the ring, or a substituted phenol ring.

19. The process according to one of the preceding claims, wherein the organic compound is selected from sterically hindered phenols; ethoxylated amines; ethoxylated amides; sorbitan ester compounds, preferably sorbitan C₈ to C₂₀ fatty acid esters such as sorbitan stearate, sorbitan monooleate; thioether compounds, or combinations thereof.
